# EUROPEAN PATENT SPECIFICATION

(11) **EP 1 053 632 B1**
(45) Date of publication and mention of the grant of the patent: **12.01.2005**
(21) Application number: 98955607.1
(22) Date of filing: 17.11.1998
(51) Int. Cl.: H04M 19/00

(54) **SUBSCRIBER LINE INTERFACE CIRCUIT**
TEILNEHMERANSCHLUSSSCHNITTSTELLENSCHALTUNG
CIRCUIT D'INTERFACE DE LIGNE D'ABONNE

(30) Priority: 18.11.1997 FI 974274
(43) Date of publication of application: 22.11.2000
(73) Proprietor: Nokia Corporation, 02150 Espoo (FI)
(72) Inventor: NORDSTRÖM, Caj, FIN-02760 (FI); HURME, Harri, FIN-02100 Espoo (FI)
(74) Representative: Äkräs, Tapio Juhani
(86) International application number: PCT/FI1998/000901
(87) International publication number: WO 1999/027704

(56) References cited:
- WO-A1-96/15617
- GB-A- 2 193 063
- US-A- 4 317 963
- US-A- 4 431 868
- US-A- 4 853 959

## Description

The invention relates to a subscriber line in a telephone system.

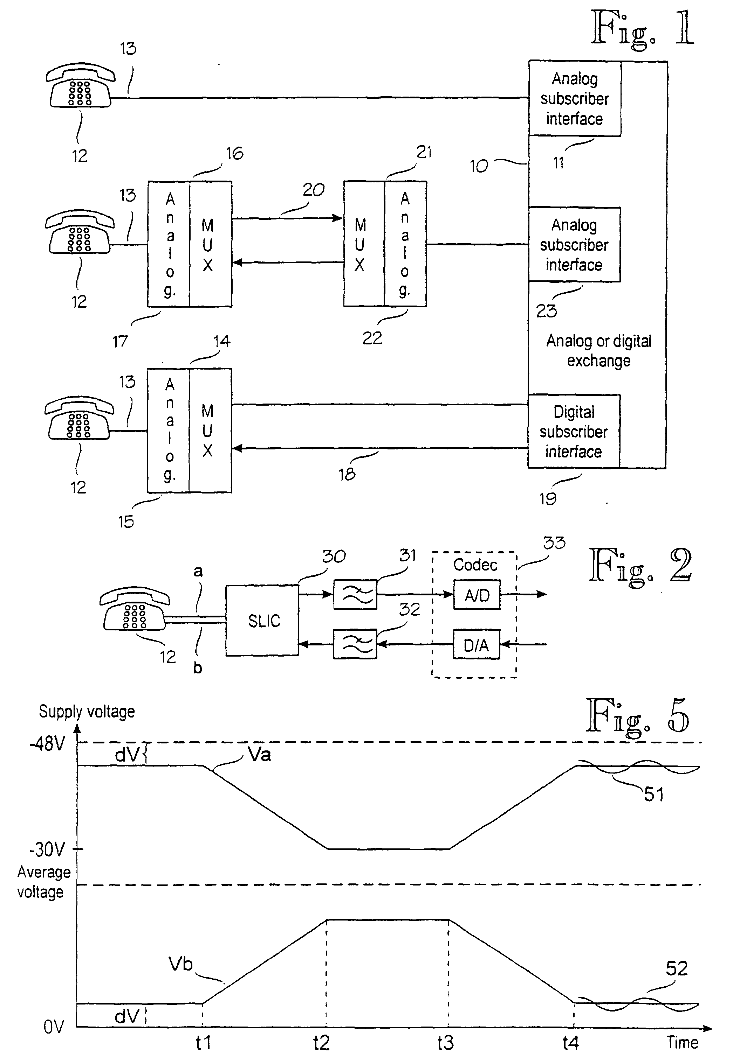

Although digital exchanges are nowadays widely used in telephone networks, subscriber lines between an exchange and a subscriber are typically analog two-wire lines. Digital exchanges therefore need to be provided with a specific analog subscriber interface which interfaces a time-divisional signal from a digital exchange to an analog subscriber line, as shown in Figure 1, where a subscriber interface 11 of an exchange 10 is connected to a subscriber line 13 leading to a subscriber terminal 12. Figure 1 also shows an analog subscriber interface 15 which can be located in a multiplexing unit 14 arranged separately from the exchange 10, the multiplexing unit being connected to a digital subscriber interface 19 of the exchange via a digital link 18 (of e.g. 2 Mbit/s). This kind of a remote multiplexing unit 16 can also be connected via a digital link 20 (of e.g. 2 Mbit/s) to another multiplexing unit 21 located close to the exchange. An analog subscriber interface 221 of the other multiplexing unit is connected, in turn, to an analog subscriber interface 23 in a digital or an analog exchange. Multiplexers and digital connections used as described above support longer distances between subscribers and an exchange than a purely analog subscriber line. In addition, a multiplexer can be placed close to the subscribers, which allows a subscriber network to be implemented in a star configuration of short subscriber lines and, thereby, at relatively low cabling costs.

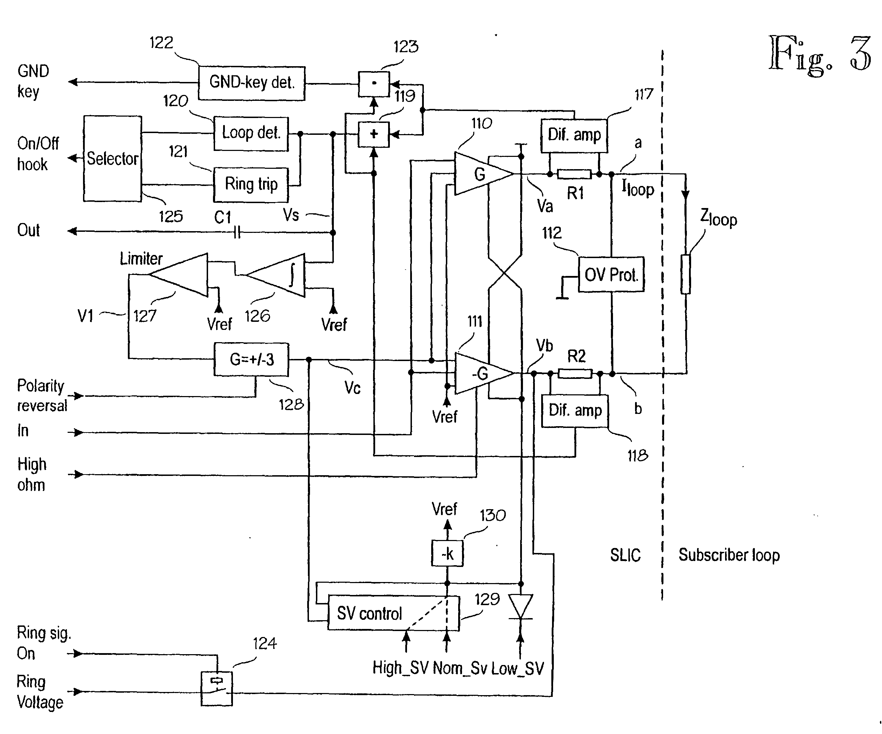

The principle of a subscriber line interface of a digital exchange is shown in Figure 2. Wires a and b of an analog subscriber line are connected to a subscriber line interface circuit 30 (SLIC). Audio frequencies appearing on the wires a and b are routed to the SLIC 30 which sets a termination impedance of the subscriber line and separates transmit and receive direction signals from one another. A receive direction signal is supplied via a low-pass filter 31 to a codec 33 which converts the analog signal of the subscriber line into a digital PCM coded form and transfers the PCM signal further to the exchange. Correspondingly, a PCM coded signal arriving from the exchange is converted in the codec 33 into an analog transmit direction signal, which is supplied to the subscriber line via a low-pass filter 32 and the SLIC 30.

The most important functions of a subscriber line interface circuit SLIC comprise power supply to the subscriber line, ring voltage supply, detection of subscriber loop activation (off-hook), etc. An active subscriber loop, or off-hook, is a situation in which the subscriber has lifted the handset from its holder and an associated switch connects the a and b wires of the subscriber line together, a direct current loop being thereby formed from the SLIC via the subscriber line to the subscriber terminal, and back. When the subscriber loop activates, the SLIC detects the loop current and informs the exchange about the off-hook state. When the handset is replaced (on-hook), the subscriber loop opens and the loop current disappears. The SLIC detects that there is no loop current and informs the on-hook state to the exchange.

The distances of the subscribers from the exchange vary greatly. Some of the subscribers may be very close to the exchange, within 50-500 m, for example, while others may be several kilometers away from it. For this reason the length of the subscriber lines also varies, thereby causing variation in subscriber loop resistance. Further variation in subscriber loop resistance is caused by subscriber terminal type, subscriber line characteristics, the number of subscriber terminals connected to a subscriber line, etc. One of the requirements concerning a subscriber line interface is that the loop current must be substantially constant irrespective of the total resistance and dissipation in the subscriber loop. The output stage of the subscriber line interface circuit, which supplies the loop current, must therefore be provided with a loop current control.

An object of the present invention is to provide a simple and inexpensive subscriber line interface circuit comprising a control function maintaining a constant loop current.

This is achieved with a subscriber line interface circuit (SLIC) to be connected to a bi-directional, two-wire subscriber line for the transfer of audio signals and for power supply, the subscriber line interface circuit comprising an output amplifier stage providing supply voltage to the subscriber line; and loop current detector means for measuring the loop current said supply voltage causes in the subscriber loop formed by the subscriber line and a subscriber terminal when the subscriber terminal is in an off-hook state. The circuit of the invention is characterized in that
said output amplifier stage comprises a first, non-inverting amplifier, having an input connected to a reference voltage and to a control voltage, and an output connected to a first wire of the subscriber line; and a second, inverting amplifier, having a first input connected to a reference voltage, a second input connected to a control voltage, and an output connected to a second wire of the subscriber line, said first and second amplifiers being arranged to provide, according to said control voltage, a first and a second output voltage, which are of an equal magnitude but have opposite signs with respect to a subscriber line average voltage determined by said reference voltage;
said detector means comprise means for measuring a first current in the first subscriber line wire and a second current in the second subscriber line wire, and for producing a sum of the first and the second measurement results;
and that the subscriber line interface circuit also comprises a control means responsive to said sum of the measurement results for changing the control voltage, at the beginning of an off-hook state, with a predetermined time constant, thereby reducing the first and the second output voltages from a maximum voltage to a lower voltage providing a desired loop current.

The output stage of the subscriber line interface circuit comprises two amplifiers, one of which is configured to operate as an inverting amplifier (negative amplification) and the other one as a non-inverting amplifier (positive amplification). The output of each amplifier is connected to a respective subscriber line wire. A common reference voltage and a common control voltage are supplied to both amplifiers. The reference voltage sets amplifier output voltages of the lowest control voltage level substantially at an average voltage, or symmetry point, between the subscriber line supply voltage and ground. With a minimum control voltage, the output of both amplifiers is at the average voltage and there is no voltage difference between the subscriber lines. As the amplifier control voltage increases, the voltage of the first amplifier changes from the average voltage towards ground potential and the output voltage of the second amplifier towards the supply voltage, or vice versa, depending on the control voltage potential. Consequently, as the amplifier output voltages increase symmetrically in relation to the average voltage, voltage difference between the subscriber line wires also increases which, in turn, increases subscriber loop current.

Loop current is measured from each wire of the subscriber line and the results are summed together, a common mode interference possibly appearing being thereby cancelled. The sum of the measurement results is thus directly proportional to the loop current value. The sum of the measurement results is supplied to the control means, the output voltage of which is the control voltage of the first and the second amplifiers. If the loop current is too high, the control means changes the control voltage, with a predetermined time constant, to a direction decreasing the output voltages of the amplifiers. This makes also the voltage difference between the subscriber line wires smaller, thereby reducing the loop current. When the measured loop current reaches a desired magnitude, the control voltage provided by the control means is set at the voltage level thus obtained. As a result, a very simple and inexpensive subscriber line power supply and loop current control is obtained. The control sets the loop current to suit a particular subscriber loop resistance and dissipation, and it also adapts to slow changes in the subscriber loop characteristics. However, because of the time constant, the control loop filters off rapid changes measured in the loop current and caused by momentary disturbances or by an alternating voltage audio signal transferred over the subscriber line. In a preferred embodiment of the invention, the control means is an integrator.

In one embodiment of the invention, the control loop is provided with a voltage limiter which, in order to allow an alternating voltage information signal to be transferred over the subscriber line in an on-hook state, limits the maximum control voltage of the on-hook state to a level ensuring that the maximum output voltages of the first and the second amplifiers are at a predetermined voltage offset from ground and from an operating voltage potential. A voltage offset of some volts is preferred. Without the limiter, the control voltage provided by the integrator would increase in an on-hook state (because loop current is missing, being thus less than said threshold value) to the level of said reference voltage, whereby the output voltages of the amplifiers would be controlled to operating voltage and ground potentials. For this reason the voltage limiter limits the maximum control voltage to a level that is lower than the reference voltage by an amount equal to a predetermined voltage margin, which corresponds to a desired voltage margin of the output voltages. Information transfer taking place in an on-hook state can be used, for example, for transferring a calling subscriber's telephone number to a subscriber terminal and for displaying the number on the subscriber terminal's display before the subscriber answers the call.

In one embodiment of the invention, the control loop is provided with a polarity reversal circuit, which supplies the control voltage to the amplifiers at a first polarity or at a second, reversed polarity, depending on the state of a polarity control signal supplied by a telephone exchange. This offers a simple way of providing polarity reversal which some telephone systems use for signalling from an exchange to a subscriber terminal over a subscriber line. When the polarity of the control voltage is changed, the output voltage of the first amplifier changes from operating voltage to ground and that of the second amplifier from ground to operating voltage, or vice versa.

According to still another embodiment of the invention, the power source which provides the operating voltage and said reference voltage for the first and the second amplifiers is arranged to change the amplifier operating voltage according to the amplifier output voltage needed for generating a desired loop current. Since the loop current is substantially constant, the output voltage needed for generating the loop current principally depends on subscriber loop resistance; a high loop resistance requires a high amplifier output voltage. When the loop resistance is low, a low amplifier output voltage is required. The difference between the amplifier operating voltage and output voltage is lost in the form of power dissipation in the amplifiers. The operating voltage being reduced, as defined in the invention, when a lower amplifier output voltage is needed, allows amplifier power dissipation and, thereby, power consumption to be reduced. Power sources may have two or more operating voltages, for example, from which a suitable voltage for a particular loop resistance is selected. In one embodiment of the invention, the power source is responsive to said control voltage, thereby allowing a suitable operating voltage to be selected for the amplifier. This is advantageous because the control voltage level is directly proportional to amplifier output voltage. For example, when the power source has two operating voltages for an off-hook state, the power source can be arranged to supply a first, lower operating voltage when the control voltage level is lower than the predetermined threshold value, and a second, higher operating voltage when the control voltage level exceeds said threshold value, and a second, higher operating voltage when the control voltage level exceeds said threshold value. Some telephone systems require, in addition, a particularly high operating voltage for a subscriber line in an on-hook situation. The power source can be arranged to only supply the high operating voltage when the subscriber line is in an on-hook state, and to use lower operating voltages for an off-hook state. In addition, the power source is arranged to set said reference voltage on the basis of the operating voltage in such a way that the average voltage remains at a correct level.

In the following, preferred embodiments of the invention will be described with reference to the accompanying drawings, in which
Figure 1 illustrates different ways of implementing a subscriber network in an analog or a digital local exchange;
Figure 2 is a schematic block diagram illustrating an analog subscriber interface;
Figure 3 is a block diagram illustrating a subscriber line interface circuit of the invention;
Figure 4 is a circuit diagram illustrating an integrator, a limiter and a polarity reversal circuit of Figure 3;
Figure 5 is a graph illustrating output voltages of amplifiers as a function of time, in on-hook and off-hook states.

A subscriber line interface circuit of the present invention can be applied to analog subscriber interfaces, in digital or analog exchanges or in separate multiplexers.

Figure 3 illustrates a subscriber line interface circuit (SLIC) of the preferred embodiment of the invention. The output stage of the subscribe line interface circuit comprises two amplifiers 110 and 111, the outputs of which are coupled to respective wires a and b of the subscriber line (subscriber loop). The amplifier 111 is configured to operate as an inverting amplifier (negative amplification -G) and the amplifier 110 is configured to operate as a non-inverting amplifier (positive amplification G). A common reference voltage Vref and a common control voltage Vc are supplied to both amplifiers 110 and 111. At the lowest control voltage Vc level (0 volts), the reference voltage Vref sets output voltages Va and Vb of the amplifiers 110 and 111 substantially at an average voltage (e.g. Nom_SV/2), or symmetry point, between the subscriber line supply voltage (Low_SV, ₗₗₗₗₗ or High_SV) and ground. With a minimum control voltage Vc (0 V), the output of both amplifiers 110 and 111 is at said average voltage and there is no voltage difference between the subscriber wires a and b. As the amplifier control voltage Vc increases (> 0 V), the output voltage Vb of the amplifier 111 changes from the average voltage towards ground potential and the output voltage Va of the amplifier 110 towards the supply voltage, or vice versa, depending on the polarity of the control voltage Vc. Consequently, as the amplifier output voltages Va and Vb increase symmetrically in relation to the average voltage, voltage difference between the subscriber line wires a and b also increases, thereby increasing loop current lloop in the subscriber loop.

Speech information from a signal input IN is also supplied to both amplifiers 110 and 111. Although Figure 3 shows, for the sake of clarity, separate inputs for speech and for control voltage, in practice they can be summed to one and the same input through resistors.

The loop current lloop is separately measured from the wires a and b by means of serial resistors R1 and R2 and differential amplifiers 117 and 118. The output voltage of the differential amplifier 117 is proportional to a voltage generated across the resistor R1 by the loop current lloop. Correspondingly, the output voltage of the differential amplifier 118 is proportional to a voltage generated across the resistor R2 by the loop current lloop. The measured voltages are summed in a summing device 119 (such as an operational amplifier) and the summed voltage Vs is supplied to an integrator 126 and to detectors 120 and 121. The summation of the measurement voltages is used for cancelling any common mode interference possibly appearing in the subscriber line, the summed voltage Vs thus being directly proportional to the value of the loop current lloop.

The summed voltage Vs is supplied to the integrator that generates a control voltage V1, the maximum level of which is limited in a limiter 127. The control voltage V1 is then supplied to a polarity reversal circuit, the output of which is the control voltage Vc of the amplifiers 110 and 111.

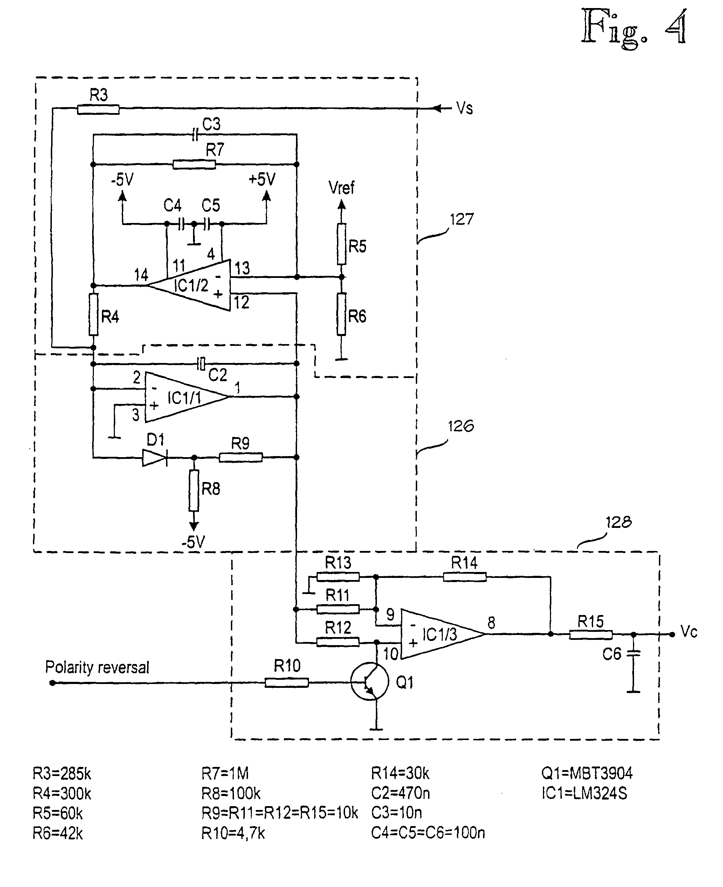

Figure 4 is a circuit diagram illustrating the integrator 126, limiter 127 and polarity reversal circuit 128 of the preferred embodiment of the invention. The circuit involves one integrated circuit IC1, or quad-operational amplifier LM324S. The integrator 126 comprises an operational amplifier IC1/1, resistors R8 and R9, capacitor C2 and diode D1. The voltage limiter 127 comprises an operational amplifier IC1/2, capacitors C3, C4 and C5, resistors R3, R4 and R7, and a voltage divider formed by resistors R5 and R6.

When the subscriber loop is in the on-hook state and there is no loop current lloop, the summed voltage Vs is substantially zero. The voltage V1 of an output terminal 1 of the operational amplifier IC1/2 connected as the integrator is then substantially the same as the portion of the reference voltage Vref formed by the voltage divider R5 and R6, i.e. K*Vref, where K<1. The maximum level of the control voltage V1, and thereby that of the control voltage Vc, is thus limited to the voltage K*Vref. The voltage K*Vref also appears across the capacitor C2. With a maximum control voltage Vc, the output voltages of the amplifiers 110 and 111 are, as shown by the graph in Figure 5, close to the supply voltage SV (e.g. -48V) and ground (0 V). However, since the control voltage Vc is limited to a maximum level which is lower than Vref, a voltage margin dV ( preferably of 1 to 3 V) is left both between the output voltage Va and the supply voltage -48V and between the output voltage Vb and ground, so as to allow information transfer in an on-hook state, as will be described below.

Let us assume that the subscriber off-hooks the handset at a moment t1, whereby the subscriber loop closes and loop current lloop begins to flow. The output voltages Va and Vb being at the maximum level, the loop current lloop is also first high, depending on the loop resistance Zloop. Consequently, the summed voltage Vs supplied to an input terminal 2 of the operational amplifier IC1/2 increases. The voltage across the capacitor C2, and thereby the control voltages V1 and Vc, then begin to decrease with the integrator time constant. The decrease in the control voltage Vc reduces the output voltages Va and Vb of the amplifiers and thereby the loop current lloop between t1-t2, as shown in Figure 5. Decrease in the loop current lloop reduces the summed voltage Vs in the input terminal 2 of the operational amplifier lC1/2. The control loop thus reduces the loop current and the voltages Vs and Vc in this way until the summed voltage Vs reaches a threshold value which corresponds to the desired loop current lloop. The threshold value is set by means of the resistors R3 and R4. When the threshold value is reached, the level of the control voltage Vc and the output voltages va and Vb are locked, as shown between t2-t3 in Figure 5. At the moment t3, the subscriber on-hooks the handset, the subscriber loop opens, the loop current lloop is cut off and the summed voltage Vs drops to zero. The voltage across the capacitor C2, and thereby the control voltage Vc, then start to rise again towards the value K*Vref, which is reached at a moment t4. The output voltages Va and Vb rise similarly to their maximum values.

As stated above, in the on-hook state, the voltage limiter 127 limits the maximum control voltage to a level at which the maximum output voltages Va and Vb of the amplifiers 110 and 111 are at a predetermined voltage offset dV from ground and from the supply voltage potential, so as to allow an alternating voltage information signal to be transferred over the subscriber line in the on-hook state. A voltage offset dV of some volts is preferred. Without the limiter 127, the control voltage generated by the integrator 126 would increase in the on-hook state (where loop current is missing) to the level of the reference voltage Vref, the output voltages of the amplifiers 110 and 111 then being controlled to operating voltage and ground potentials. Figure 3 shows that information to be transferred in the on-hook state can be supplied to the inputs of the amplifiers 110 and 111 via the signal input In, similarly as speech in an off-hook state, for example. In this case the information is in the form of an amplitude modulation of the amplifier output voltages, as illustrated by sine waves 51 and 52 in Figure 5. The information transmitted by the subscriber terminal is in the form of a similar voltage modulation, which can be detected by the differential amplifiers 117 and 118. The received information is then transmitted to a signal output Out via capacitor C1. Information transfer in the on-hook state may be applied for instance for transferring a calling subscriber's telephone number to a subscriber terminal and for displaying the number on the subscriber terminal's display before the subscriber answers the call.

The polarity reversal circuit 128 supplies the control voltage Vc to the amplifiers 110 and 111 in a conventional manner by applying the above described polarity, the polarities of the output voltages Va and Vb thus being also as shown in Figure 5. By means of a signal Polarity Reversal, the telephone exchange can, however, control the circuit 128 so that it reverses the polarity of the control signal Vc, and thereby the polarities of the output voltages Va and Vb. In Figure 5, polarity reversal would mean that the voltages Va and Vb would momentarily exchange places with one another. This offers a simple way of providing polarity reversal which some telephone systems use for signalling from an exchange to a subscriber terminal over a subscriber line.

Figure 4 is a circuit diagram of the preferred embodiment of the invention illustrating the polarity reversal circuit 128. The polarity reversal circuit 128 comprises an operational amplifier IC1/3, transistor Q1, resistors R10, R11, R12, R13, R14 and R15, and capacitor C6. The transistor Q1 switches the operational amplifier IC1/3 to operate either as a non-inverting amplifier or an inverting amplifier, depending on the state of the control signal Polarity Reversal. When the control signal Polarity Signal is '0', the transistor Q1 does not conduct. This means that the IC1/3 operates as a non-inverting amplifier and allows the control signal Vc to pass through without polarity reversal. When the control signal Polarity Reversal is '1', the transistor Q1 conducts and couples the +input of the amplifier IC1/3 to ground. In this case the IC1/3 operates as an inverting amplifier and reverses the polarity of the control signal Vc.

According to still another embodiment of the invention, the power source 129 which provides the operating voltage for the amplifiers 110 and 111 is arranged to change the amplifier operating voltage according to the amplifier output voltages Va and Vb needed for generating the desired loop current lloop. Since the loop current lloop is substantially constant, the voltage Va-Vb needed for generating the loop current lloop principally depends on the resistance Zloop of the subscriber loop; a high loop resistance Zloop requires high amplifier output voltages Va-Vb. When the loop resistance Zloop is low, low amplifier output voltages Va-Vb are required. The difference between the operating voltage and the output voltages Va and Vb of the amplifiers 110 and 111 is lost in the form of power dissipation in the amplifiers. The operating voltage being reduced, as defined in the invention, when a lower amplifier output voltage is needed, allows amplifier power dissipation and, thereby, power consumption to be reduced. The power source 129 can have two or more operating voltages, for example, from which a voltage suitable for a particular loop resistance is selected. In Figure 3 the power source 129 provides three different operating voltages: normal voltage Nom_SV (e.g. - 48V), high voltage High_SV (e.g. -60V) and low voltage Low_SV (e.g. -30V). In some countries, telephone systems require, in addition, a particularly high supply voltage (about -60V) for a subscriber line in the on-hook state. In such case, the power source 129 supplies to the amplifiers 110 and 111 the operating voltage High_SV when the subscriber line is in the on-hook state. In another case the power source 129 supplies, as shown in Figure 5, the operating voltage Nom_SV (e.g. -48V) in the on-hook state.

In Figure 3 the power source 129 is controlled by means of the control voltage Vc. This is advantageous, because the level of the control voltage Vc is directly proportional to the output voltages Va and Vb of the amplifiers 110 and 111. When the control voltage Vc is close to Vref, the subscriber line is in the on-hook state and the power source 129 supplies Nom_SV or High_SV. When the level of the control voltage Vc in the off-hook state is lower than the predetermined threshold value, the power source 128 supplies Nom_SV. When the level of the control voltage Vc in the off-hook state exceeds the predetermined threshold value, the power source 128 supplies Low_SV. In the example shown in Figure 5, Va is less than -30V between t2-t3, which would allow the operating voltage Low_SV to be used and, consequently, power consumption to be reduced.

A voltage down-conversion circuit 130 generates the reference voltage Vref from the operating voltage produced by the power source 129. The Vref thus always sets according to the operating voltage in such a way that the average voltage remains at a correct level.

Between the subscriber wires a and b is connected an overvoltage protector unit 112 protecting the subscriber line interface circuit from overvoltage possibly coming over the subscriber line.

The information signal, i.e. a current signal, transferred over the subscriber line is converted into voltage form in the resistors R1 and R2 and transferred to the summing unit 119 via the amplifiers 117 and 118. The current being measured from both ends of a subscriber line Z1 and the results being summed together, a common mode interference signal possibly appearing in the subscriber line can be cancelled. After having been supplied to the summing unit 119, the signal is transferred to the Out terminal via a switching capacitor C1.

The subscriber line interface circuit further comprises an input Ring Voltage, to which a ring signal is supplied. The ring signal is activated by activating a switching device 124 through a control input in Ring sig. On so that the ring signal is transferred to the subscriber line wire b. When the ring signal is active, the amplifier 111 can be controlled to a high-impedance state through a control input High Ohm.

The summed voltage coming from the summing unit 119 is also transferred to detector units 120 and 121. The detector unit 120 detects if the subscriber line changes from an on-hook state to an off-hook state, i.e. if the line is activated. The detector unit 121, in turn, detects the change from an on-hook state to an off-hook state when the ring signal is active. Information about the state of the subscriber line is further transferred from the detector units 120 and 121 to an output On/Off hook through a selector unit 125. The selector unit 125 selects which one of the detector units is to be used. The selection takes place on the basis of the signal coming from the control input High Ohm; an active High Ohm signal indicates that the ring signal is also active, so the detector unit 121 will be used. Otherwise the detector unit 120 is used. The switching also comprises a detector 122 which is used for detecting a ground key signal and for transferring the signal to a GND key pin. The detector 122 receives supply information from the amplifiers 117 and 118 through a subtraction unit 123.

The accompanying specification and the related drawings are only meant to illustrate the invention. The details of an subscriber line interface circuit of the invention can vary within the scope of the accompanying claims.

## Claims

1. A subscriber line interface circuit (SLIC) arranged to be connected to a bi-directional, two-wire subscriber line for the transfer of audio signals and for power supply, the subscriber line interface circuit comprising
an output amplifier stage (110, 111) for providing supply voltage to the subscriber line;
loop current detector means (R1, R2, 117, 118, 119) for measuring the loop current said supply voltage causes in the subscriber loop formed by the subscriber line and a subscriber terminal when the subscriber terminal is in an off-hook state, whereby
said output amplifier stage comprises a first, non-inverting amplifier (110) having an input connected to a reference voltage (Vref) and to a control voltage (Vc), and an output connected to a first wire of the subscriber line; and a second, inverting amplifier (111) having a first input connected to a reference voltage (Vref), a second input connected to a control voltage (Vc) and an output connected to a second wire of the subscriber line, said first and second amplifiers (110, 111) being arranged to provide, according to said control voltage, a first (Va) and a second output voltage (Vb), which are of an equal magnitude but have opposite signs with respect to a subscriber line average voltage determined by said reference voltage;
said detector means comprise means (R1, R2, 117, 118, 119) for measuring a first current in the first subscriber line wire and a second current in the second subscriber line wire, and for producing a sum (Vs) of the first and the second measurement results;
and that the subscriber line interface circuit also comprises a control means (126) responsive to said sum (Vs) of the measurement results for changing the control voltage (Vc), at the beginning of an off-hook state, with a predetermined time constant, thereby reducing the first and the second output voltages from a maximum voltage to a lower voltage providing a desired loop current ( lₗₒₒₚ).

2. A subscriber line interface circuit according to claim 1, **characterized in that** the control means (126) is arranged to change the control voltage (Vc) in such a way that the sum (Vs) of the measurements reaches a predetermined threshold value which corresponds to said desired loop value (lₗₒₒₚ).

3. A subscriber line interface circuit according to claim 1 or 2, **characterized in that** the control means comprises an integrator means (126) having an input which is said sum of the measurement results and an output which is said control voltage.

4. A subscriber line interface circuit according to any of the claims 1, 2 or 3, **characterized in that** the circuit comprises a voltage limiter (127) which, in an on-hook state, is arranged to limit the maximum control voltage produced by the control means (126) to a level where the maximum output voltages of the first and the second amplifiers (110, 111) are at a predetermined voltage offset (dV) from ground and from operating voltage potential, so as to allow an alternating voltage information signal (51) to be transferred over the subscriber line in the on-hook state.

5. A subscriber line interface circuit according to claim 4, **characterized in that** the maximum control voltage level is lower than said reference voltage by an amount equal to a predetermined voltage margin.

6. A subscriber line interface circuit according to any one of the preceding claims, **characterized in that** said reference voltage (Vref) is arranged to control the output voltages (Va, Vb) of the amplifiers (110, 111) in such a way that at the minimum control voltage (Vc) level, at 0 volts for example, the output voltages (Vb, Va) of the first and the second amplifiers are at said average voltage, and that as the control voltage increases, the output voltage (Va) of the first amplifier (110) approaches the operating voltage potential and the output voltage (Vb) of the second amplifier (111) approaches ground, or vice versa, depending on the polarity of the control voltage (Vc).

7. A subscriber line interface circuit according to any one of the preceding claims, **characterized in that** the circuit comprises a polarity reversal circuit (128) for supplying the control voltage to the amplifiers (110, 111) at a first polarity or at a second, reversed polarity, depending on a state of a polarity control signal supplied by a telephone exchange.

8. A subscriber line interface circuit according to any one of the preceding claims, **characterized in that** the circuit also comprises a power source (129) for generating the operating voltage and said reference voltage for the first and second amplifiers (110, 111), said power source (129) being arranged to change the amplifier operating voltage according to the amplifier output voltage needed for producing the desired loop current.

9. A subscriber line interface circuit according to claim 8, **characterized in that** the power source (129) is responsive to said control voltage (Vc) for selecting a suitable operating voltage for the amplifiers.

10. A subscriber line interface circuit according to claim 9, **characterized in that** the power source (129) is arranged to supply a first, lower operating voltage when the control voltage level is lower than a predetermined threshold value, and a second, higher operating voltage when the control voltage level exceeds said threshold value.

11. A subscriber line interface circuit according to claim 10, **characterized in that**, when the subscriber line is in an on-hook state, the power source (129) is arranged to supply a third operating voltage which is higher that the first and the second operating voltages.

12. A subscriber line interface circuit according to any one of claims 9 to 11, **characterized in that** the power source (129) is arranged to set said reference voltage (Vref) on the basis of the operating voltage.

## Patentansprüche

1. Teilnehmeranschluss-Schnittstellenschaltung (SLIC), die eingerichtet ist, zur Übermittlung von Audiosignalen und zur Energieversorgung mit einem bidirektionalen Zweidraht-Teilnehmeranschluss verbunden zu sein, wobei die Teilnehmeranschluss-Schnittstellenschaltung aufweist:
eine Ausgangsverstärkerstufe (110, 111) zum Bereitstellen einer Versorgungsspannung an den Teilnehmeranschluss;
Schleifenstrom-Detektoreinrichtungen (R1, R2, 117, 118, 119) zum Messen des Schleifenstroms, den die Versorgungsspannung in der Teilnehmerschleife verursacht, die vom Teilnehmeranschluss und einem Teilnehmerendgerät gebildet wird, wenn sich das Teilnehmerendgerät in einem ausgehängten Zustand befindet, wobei
die Ausgangsverstärkerstufe einen ersten, nicht invertierenden Verstärker (110) mit einem Eingang, der mit einer Bezugsspannung (Vref) und mit einer Steuerspannung (Vc) verbunden ist, und einem Ausgang, der mit einem ersten Draht des Teilnehmeranschlusses verbunden ist; und einen zweiten, invertierenden Verstärker (111) mit einem ersten Eingang aufweist, der mit einer Bezugsspannung (Vref) verbunden ist, einem zweiten Eingang, der mit einer Steuerspannung (Vc) verbunden ist, und einem Ausgang, der mit einem zweiten Draht des Teilnehmeranschlusses verbunden ist, wobei der erste und der zweite Verstärker (110, 111) eingerichtet sind, gemäß der Steuerspannung eine erste (Va) und eine zweite (Vb) Ausgangsspannung bereitzustellen, die hinsichtlich einer Teilnehmeranschluss-Durchschnittsspannung, die durch die Bezugsspannung bestimmt ist, von gleichem Betrag sind, aber unterschiedliche Vorzeichen aufweisen;
die Detektoreinrichtung Einrichtungen (R1, R2, 117, 118, 119) zum Messen eines ersten Stroms im ersten Teilnehmeranschlussdraht und eines zweiten Stroms im zweiten Teilnehmeranschlussdraht sowie zum Erzeugen einer Summe (Vs) des ersten und des zweiten Messergebnisses aufweisen;
und die Teilnehmeranschluss-Schnittstellenschaltung auch eine Steuereinrichtung (126) aufweist, die auf die Summe (Vs) der Messergebnisse anspricht, um die Steuerspannung (Vc) zu Beginn eines ausgehängten Zustands mit einer vorbestimmten Zeitkonstanten zu verändern, wodurch die erste und die zweite Ausgangsspannung von einer Maximalspannung auf eine niedrigere Spannung herabgesetzt werden, die einen gewünschten Schleifenstrom (I_{Schleife}) bereitstellt.

2. Teilnehmeranschluss-Schnittstellenschaltung gemäß Anspruch 1, **dadurch gekennzeichnet, dass** die Steuereinrichtung (126) zum derartigen Verändern der Steuerspannung (Vc) eingerichtet ist, dass die Summe (Vs) der Messungen einen vorbestimmten Schwellenwert erreicht, der dem gewünschten Schleifenwert (I_{Schleife}) entspricht.

3. Teilnehmeranschluss-Schnittstellenschaltung gemäß Anspruch 1 oder 2, **dadurch gekennzeichnet, dass** die Steuereinrichtung eine Integratoreinrichtung (126) aufweist mit einer Eingabe, die die Summe der Messergebnisse ist, und einer Ausgabe, die die Steuerspannung ist.

4. Teilnehmeranschluss-Schnittstellenschaltung gemäß einem der Ansprüche 1, 2 oder 3, **dadurch gekennzeichnet, dass** die Schaltung einen Spannungsbegrenzer (127) aufweist, der in einem aufgelegten Zustand eingerichtet ist, die maximale Steuerspannung, die von der Steuereinrichtung (126) erzeugt wird, auf einen Pegel zu begrenzen, mit dem sich die maximalen Ausgangsspannungen des ersten und des zweiten Verstärkers (110, 111) auf einem vorbestimmten Spannungsversatz (dV) von Masse und von einem Betriebsspannungspotential befinden, um zu ermöglichen, dass ein Wechselspannungs-Informationssignal (51) im aufegelegten Zustand über den Teilnehmeranschluss übermittelt wird.

5. Teilnehmeranschluss-Schnittstellenschaltung gemäß Anspruch 4, **dadurch gekennzeichnet, dass** der maximale Steuerspannungspegel um einen Betrag, der gleich einer vorbestimmten Spannungsmarge ist, niedriger ist als die Bezugsspannung.

6. Teilnehmeranschluss-Schnittstellenschaltung gemäß einem der vorhergehenden Ansprüche, **dadurch gekennzeichnet, dass** die Bezugsspannung (Vref) eingerichtet ist, die Ausgangsspannungen (Va, Vb) der Verstärker (110, 111) derart zu steuern, dass sich die Ausgangsspannungen (Vb, Va) des ersten und des zweiten Verstärkers auf dem minimalen Steuerspannungs- (Vc) Pegel, zum Beispiel auf 0 Volt, auf der Durchschnittsspannung befinden, und dass, wenn die Steuerspannung steigt, abhängig von der Polarität von der Steuerspannung (Vc), die Ausgangsspannung (Va) des ersten Verstärkers (110) das Betriebsspannungspotential erreicht und die Ausgangsspannung (Vb) des zweiten Verstärkers (111) Masse erreicht, oder umgekehrt.

7. Teilnehmeranschluss-Schnittstellenschaltung gemäß einem der vorhergehenden Ansprüche, **dadurch gekennzeichnet, dass** die Schaltung eine Polaritätsumkehrschaltung (128) zum Bereitstellen der Steuerspannung an die Verstärker (110, 111) mit einer ersten Polarität oder mit einer zweiten, umgekehrten Polarität aufweist, abhängig von einem Zustand eines von einer Telefonvermittlung bereitgestellten Polaritätssteuersignals.

8. Teilnehmeranschluss-Schnittstellenschaltung gemäß einem der vorhergehenden Ansprüche, **dadurch gekennzeichnet, dass** die Schaltung auch eine Energiequelle (129) zum Erzeugen der Betriebsspannung und der Bezugsspannung für den ersten und den zweiten Verstärker (110, 111) aufweist, wobei die Energiequelle (129) eingerichtet ist, die Verstärkerbetriebsspannung gemäß der Verstärkerausgangsspannung zu verändern, die zum Erzeugen des gewünschten Schleifenstroms erforderlich ist.

9. Teilnehmeranschluss-Schnittstellenschaltung gemäß Anspruch 8, **dadurch gekennzeichnet, dass** die Energiequelle (129) zum Auswählen einer geeigneten Betriebsspannung für die Verstärker auf die Steuerspannung (Vc) anspricht.

10. Teilnehmeranschluss-Schnittstellenschaltung gemäß Anspruch 9, **dadurch gekennzeichnet, dass** die Energiequelle (129) eingerichtet ist, eine erste, niedrigere Betriebsspannung bereitzustellen, wenn der Steuerspannungspegel niedriger ist als ein vorbestimmter Schwellenwert, und eine zweite, höhere Betriebsspannung bereitzustellen, wenn der Steuerspannungspegel den Schwellenwert überschreitet.

11. Teilnehmeranschluss-Schnittstellenschaltung gemäß Anspruch 10, **dadurch gekennzeichnet, dass** die Energiequelle (129) eingerichtet ist, wenn sich der Teilnehmeranschluss in einem aufgelegten Zustand befindet, eine dritte Betriebsspannung zu liefern, die höher ist als die erste und die zweite Betriebsspannung.

12. Teilnehmeranschluss-Schnittstellenschaltung gemäß einem der Ansprüche 9 bis 11, **dadurch gekennzeichnet, dass** die Energiequelle (129) eingerichtet ist, die Bezugsspannung (Vref) basierend auf der Betriebsspannung einzustellen.

## Revendications

1. Un circuit d'interface de ligne d'abonné (SLIC) ménagé à être connecté à une ligne d'abonné bidirectionnelle, bifilaire pour le transfert des signaux audio et pour l'alimentation de puissance, le circuit d'interface de ligne d'abonné comportant
un étage d'amplification de sortie (110, 111) pour produire un voltage d'alimentation à la ligne d'abonné ;
des moyens détecteurs du courant de boucle (R1, R2, 117, 118, 119) pour mesurer le courant de boucle que ledit voltage d'alimentation provoque dans la boucle d'abonné formée par la ligne d'abonné et un terminal d'abonné quand le terminal d'abonné est en état décroché, dans lequel
ledit étage d'amplification de sortie comporte un premier amplificateur non-invertissant (110) ayant une entrée connectée à un voltage de référence (Vref) et un voltage de contrôle (Vc) et une sortie connectée à un premier fil de la ligne d'abonné ; et un second amplificateur invertissant (111) ayant une première entrée connectée à un voltage de référence (Vref), une seconde entrée connectée à un voltage de contrôle (Vc) et une sortie connectée à un second fil de la ligne d'abonné, lesdits premier et second amplificateurs (110, 111) étant ménagés à produire, selon ledit voltage de contrôle, un premier (Va) et un second (Vb) voltage de sortie qui sont de même magnitude mais de signes opposés par rapport au voltage moyen de la ligne d'abonné déterminé par ledit voltage de référence ;
lesdits moyens détecteurs comportent des moyens (R1, R2, 117, 118, 119) pour mesurer un premier courant dans le premier fil de la ligne d'abonné et un second courant dans le second fil de la ligne d'abonné et pour produire une somme (Vs) des résultats obtenus des première et seconde mesures ;
et que le circuit d'interface de ligne d'abonné comporte en outre un moyen de réglage (126) responsif à ladite somme (Vs) des résultats de mesure pour changer le voltage de contrôle (Vc) au début de l'état décroché à l'aide d'une constante de temps prédéterminée, ainsi réduisant les premier et second voltages de sortie du voltage maximum à un voltage inférieur produisant un courant de boucle (I_{boucle}) désiré.

2. Un circuit d'interface de ligne d'abonné selon la revendication 1, **caractérisé en ce que** le moyen de réglage (126) est ménagé à changer le voltage de contrôle (Vc) de telle manière que la somme (Vs) des résultats de mesure atteint une valeur du seuil prédéterminée qui correspond à la valeur de boucle (I_{boucle}) désirée.

3. Un circuit d'interface de ligne d'abonné selon la revendication 1 ou 2, **caractérisé en ce que** le moyen de réglage comporte un moyen intégrateur (126) dont l'entrée est ladite somme des résultats de mesure et la sortie est ledit voltage de contrôle.

4. Un circuit d'interface de ligne d'abonné selon l'une quelconque des revendications 1, 2 ou 3, **caractérisé en ce que** le circuit comporte un limiteur de voltage (127) qui, en état raccroché, est ménagé à limiter le voltage de contrôle maximum produit par le moyen de réglage (126) au niveau où les voltages de sortie maximaux des premier et second amplificateurs (110, 111) présentent un décalage prédéterminé de voltage (dV) de la terre et du potentiel du voltage de fonctionnement, afin de permettre un signal d'information (51) de type tension alternative d'être transmis par la ligne d'abonné en état raccroché.

5. Un circuit d'interface de ligne d'abonné selon la revendication 4, **caractérisé en ce que** le niveau du voltage de contrôle maximum est inférieur audit voltage de référence d'une quantité égale à une marge de voltage prédéterminée.

6. Un circuit d'interface de ligne d'abonné selon l'une quelconque des revendications précédentes, **caractérisé en ce que** ledit voltage de référence (Vref) est ménagé à contrôler les voltages de sortie (Vb, Va) des amplificateurs (110, 111) de telle manière qu'au niveau minimum du voltage de contrôle (Vc), par exemple à 0 volt, les voltages de sortie (Va, Vb) des premier et second amplificateurs sont au niveau dudit voltage moyen, et que quand le voltage de contrôle augmente, le voltage de sortie (Va) du premier amplificateur (110) approche le potentiel du voltage de fonctionnement et le voltage de sortie (Vb) du second amplificateur (111) approche la terre, ou vice versa, dépendant de la polarité du voltage de contrôle (Vc).

7. Un circuit d'interface de ligne d'abonné selon l'une quelconque des revendications précédentes, **caractérisé en ce que** le circuit comporte un circuit de renversement de polarité (128) pour alimenter le voltage de contrôle aux amplificateurs (110, 111) à la première polarité ou à la seconde polarité renversée, dépendant de l'état d'un signal de commande de polarité fourni par un central téléphonique.

8. Un circuit d'interface de ligne d'abonné selon l'une quelconque des revendications précédentes, **caractérisé en ce que** le circuit comporte en outre une source de puissance (129) pour générer le voltage de fonctionnement et ledit voltage de référence pour les premier et second amplificateurs (110, 111), ladite source de puissance (129) étant ménagée à changer le voltage de fonctionnement de l'amplificateur selon le voltage de sortie de l'amplificateur nécessaire pour produire le courant de boucle désiré.

9. Un circuit d'interface de ligne d'abonné selon la revendication 8, **caractérisé en ce que** la source de puissance (129) est responsive audit voltage de contrôle (Vc) pour choisir un bon voltage de fonctionnement pour les amplificateurs.

10. Un circuit d'interface de ligne d'abonné selon la revendication 9, **caractérisé en ce que** la source de puissance (129) est ménagée à produire un premier voltage de fonctionnement inférieur quand le niveau du voltage de contrôle est inférieur à une valeur du seuil prédéterminée, et un second voltage de fonctionnement supérieur quand le voltage de contrôle dépasse ladite valeur du seuil.

11. Un circuit d'interface de ligne d'abonné selon la revendication 10, **caractérisé en ce que** quand la ligne d'abonné est en état raccroché la source de puissance (129) est ménagée à produire un troisième voltage de fonctionnement supérieur aux premier et second voltages de fonctionnement.

12. Un circuit d'interface de ligne d'abonné selon l'une quelconque des revendications 9 à 11, **caractérisé en ce que** la source de puissance (129) est ménagée à mettre ledit voltage de référence (Vref) d'après le voltage de fonctionnement.
